# EUROPÄISCHE PATENTSCHRIFT

(11) **EP 2 701 954 B1**
(45) Veröffentlichungstag und Bekanntmachung des Hinweises auf die Patenterteilung: **13.05.2015**
(21) Anmeldenummer: 12710260.6
(22) Anmeldetag: 22.03.2012
(51) Int. Cl.: B60T 7/12

(54) **VERFAHREN ZUM AUTOMATISCHEN HALTEN EINES KRAFTFAHRZEUGS IM STILLSTAND**
METHOD FOR AUTOMATICALLY KEEPING A MOTOR VEHICLE AT A STANDSTILL
PROCÉDÉ DE MAINTIEN AUTOMATIQUE D'UN VÉHICULE AUTOMOBILE À L'ARRÊT

(30) Priorität: 26.04.2011 DE 102011017528
(43) Veröffentlichungstag der Anmeldung: 05.03.2014
(73) Patentinhaber: Robert Bosch GmbH, 70442 Stuttgart (DE)
(72) Erfinder: BURKERT, Jochen, 70806 Kornwestheim (DE); OLIVEIRA, Raphael, 71522 Backnang (DE)
(86) Internationale Anmeldenummer: PCT/EP2012/055051
(87) Internationale Veröffentlichungsnummer: WO 2012/146443

(56) Entgegenhaltungen:
- DE-A1-102004 056 413
- DE-A1-102009 011 802
- US-A1- 2010 181 823

## Beschreibung

### Stand der Technik

Die Erfindung betrifft ein Verfahren zum automatischen Halten eines Kraftfahrzeugs im Stillstand, gemäß dem Oberbegriff des Patentanspruchs 1, sowie eine entsprechende Vorrichtung zur Durchführung des erfindungsgemäßen Verfahrens.

Moderne Kraftfahrzeuge umfassen häufig eine Berganfahrhilfe (HHC: Hill Hold Control), die das Fahrzeug automatisch auf einer Steigung hält, ohne dass der Fahrer hierzu die Bremse betätigen muss. Hill Hold-Systeme arbeiten im Allgemeinen wie folgt: Bei einem Bremsvorgang, bei dem der Fahrer das Fahrzeug bis zum Stillstand abbremst, wird der an den Radbremsen herrschende Bremsdruck mit Hilfe von Schaltventilen - üblicherweise den so genannten Umschaltventilen - eingesperrt. Die Ventile werden hierzu von einem Steuergerät, in dem die HHC-Funktion hinterlegt ist, mit einem entsprechenden Strom angesteuert. Der am Ventil eingestellte Ventilstrom bestimmt dabei die Höhe des Bremsdrucks, den das betreffende Ventil zu Halten in der Lage ist. Ist der am Ventil abfallende Differenzdruck größer als der Druckschwellenwert, wird das Ventil überströmt. Somit kann ein vorgegebener Druck in den Radbremsen gehalten werden, auch wenn der Fahrer den Fuß vom Bremspedal nimmt. Um die Bremsen wieder zu lösen, muss der Fahrer in der Regel das Fahrpedal betätigen, oder die HHC-Funktion wird automatisch deaktiviert, wenn das Bremspedal z.B. etwa 2 s nicht mehr betätigt wurde.

Bei den aus dem Stand der Technik bekannten Hill Hold Systemen werden die Ventile in der Regel erst geschlossen, wenn der Fahrer das Bremspedal bereits teilweise gelöst hat und der am Hauptbremszylinder herrschende Bremsdruck bis auf einen vorgegebenen Zieldruck abgesunken ist. Um die Ventile im genannten Zeitpunkt schließen zu können, wird der am Hauptbremszylinder herrschende Bremsdruck mittels eines Drucksensors, dem so genannten Vordrucksensor, überwacht. Der Zieldruck ist üblicherweise ein Druck, der wenigstens so groß ist, dass das Fahrzeug sicher im Stillstand gehalten werden kann.

Bekannte Hill Hold Systeme benötigen daher wenigstens zwei Sensoren, nämlich einen Sensor zur Bestimmung der Fahrbahnsteigung und einen Drucksensor zur Überwachung des Bremsdrucks in einem Bremskreis. Damit sind gängige Hill Hold Systeme relativ aufwändig und insbesondere als Ausstattungskomponente für Fahrzeuge der niedrigen Preisklasse zu teuer.

DE 10 2004 056413 A1 offenbart ein Verfahren zur Verhinderung des Rückrollens eines mit einem Automatikgetriebe ausgestatteten Fahrzeugs nach Lösen der Parkstufe bei einem Anfahrvorgang an einer längsgeneigten Fahrbahn, bei dem die Neigung der Fahrbahn ermittelt wird und abhängig von der ermittelten Neigung an wenigstens einer Radbremse des Fahrzeugs fahrerunabhängig ein Bremsdruck aufgebaut wird.

### Offenbarung der Erfindung

Es ist daher Aufgabe der vorliegenden Erfindung, eine kostengünstigere Vorrichtung zum automatischen Halten eines Kraftfahrzeugs im Stillstand, sowie ein entsprechendes Verfahren zu schaffen.

Gelöst wird diese Aufgabe gemäß der Erfindung durch die in den unabhängigen Ansprüchen angegebenen Merkmale. Weitere Ausgestaltungen der Erfindung sind Gegenstand von Unteransprüchen.

Gemäß der Erfindung wird vorgeschlagen, in einem Kraftfahrzeug, welches mit einer Berganfahrhilfe (HHC) ausgestattet ist, eine Steigungsinformation und einen davon abhängigen Druckschwellenwert zu ermitteln, und den Druckschwellenwert an einem Ventil, mittels dessen der an einer Radbremse herrschende Bremsdruck gehalten werden kann, unabhängig von der Höhe des im Bremskreis herrschenden Bremsdrucks einzustellen. Da der Druckschwellenwert zeitlich unabhängig von dem im Bremskreis herrschenden Bremsdruck am Ventil eingestellt wird, kann der im Stand der Technik notwendige Vordrucksensor eingespart werden, wodurch das Hill Hold System deutlich kostengünstiger wird.

Das erfindungsgemäße Ventil ist vorzugsweise ein Stellventil, an dem durch Vorgabe eines Ventilstroms ein bestimmter Druckschwellenwert eingestellt werden kann. Der Druckschwellenwert bestimmt dabei den Druck, den das Ventil zu Halten in der Lage ist. Solange der am Ventil abfallende Differenzdruck größer ist als der eingestellte Druckschwellenwert, wird das Ventil überströmt.

Gemäß einer bevorzugten Ausführungsform der Erfindung wird der Druckschwellenwert am Ventil eingestellt, noch bevor der Fahrer begonnen hat, die Bremse zu lösen. Vorzugsweise wird der Druckschwellenwert eingestellt, sobald die Betriebsbremse betätigt wird und das Fahrzeug zum Stillstand gekommen ist. Dass die Betriebsbremse betätigt wird, kann z. B. über den Bremslichtschalter (BLS) erkannt werden. BLS geschlossen bedeutet dabei "Bremse betätigt" und BLS offen "Bremse nicht betätigt". Der Stillstand des Fahrzeugs kann in bekannter Weise mittels der Rad-Drehzahlsensoren erkannt werden.

Bei kleineren Steigungen ist prinzipiell weniger Bremsdruck erforderlich als bei größeren Steigungen, um das Fahrzeug im Stillstand zu halten. Der am Ventil eingestellte Druckschwellenwert ist daher vorzugsweise bei kleineren Steigungen kleiner als bei größeren Steigungen. Er kann in der Ebene beispielsweise 15 bar und bei einer Steigung von 20% zum Beispiel 50 bar betragen.

Gemäß einer speziellen Ausführungsform der Erfindung wird in Abhängigkeit von der Steigung ein Mindestbremsdruck ermittelt, der zum Halten des Fahrzeugs im Stillstand erforderlich ist, und der Druckschwellenwert dann mindestens so hoch eingestellt wie der Mindestbremsdruck. Auf diese Weise wird sichergestellt, dass sich das Fahrzeug nicht ungewollt in Bewegung setzt. Der Mindestbremsdruck kann z. B. aus einer Kennlinie ausgelesen werden.

Aus Sicherheitsgründen kann auch ein höherer Wert als der Mindestbremsdruck am Ventil eingestellt werden. Gemäß einer speziellen Ausführungsform der Erfindung kann z. B. eine von der Steigung abhängige Druckerhöhung ermittelt und der Druckschwellenwert um die Druckerhöhung höher eingestellt als der Mindestbremsdruck.

Die Steigung kann z. B. mit Hilfe eines Beschleunigungssensors geschätzt oder mittels eines Neigungssensors direkt gemessen werden.

Der Druckschwellenwert bleibt vorzugsweise so lange am Ventil eingestellt, bis ein Anfahrwunsch des Fahrers erfasst wurde. Das Ventil kann z. B. geöffnet werden, wenn ein Anfahrwunsch erkannt wurde und das Motormoment größer ist als das zum Anfahren auf der Steigung benötigte Moment.

Bei einem Fahrzeug mit mehreren Bremskreisen und/oder mehreren Ventilen können grundsätzlich identische oder verschiedene Druckschwellenwerte eingestellt werden.

Zur Durchführung des vorstehend beschriebenen Verfahrens ist vorzugsweise eine Steuervorrichtung mit einem entsprechenden Algorithmus vorgesehen.

Die Erfindung wird nachstehend anhand der beigefügten Zeichnungen beispielhaft näher erläutert. Es zeigen:
- Fig. 1a: den zeitlichen Verlauf des Bremsdrucks an einem Rad und am Hauptbremszylinder in einem Bremskreis eines Fahrzeugs, das mit einem bekannten Hill Hold System ausgestattet ist;
- Fig. 1b: den zugehörigen zeitlichen Verlauf eines Ventilstroms eines Ventils zum automatischen Halten eines Bremsdrucks in einer Radbremse;
- Fig. 2: den zeitlichen Verlauf des Bremsdrucks in einem Bremskreis eines Fahrzeugs, das mit einem erfindungsgemäßen Hill Hold System ausgestattet ist; und
- Fig. 2b: den zugehörigen zeitlichen Verlauf eines Ventilstroms eines Ventils zum automatischen Halten eines Bremsdrucks in einer Radbremse.

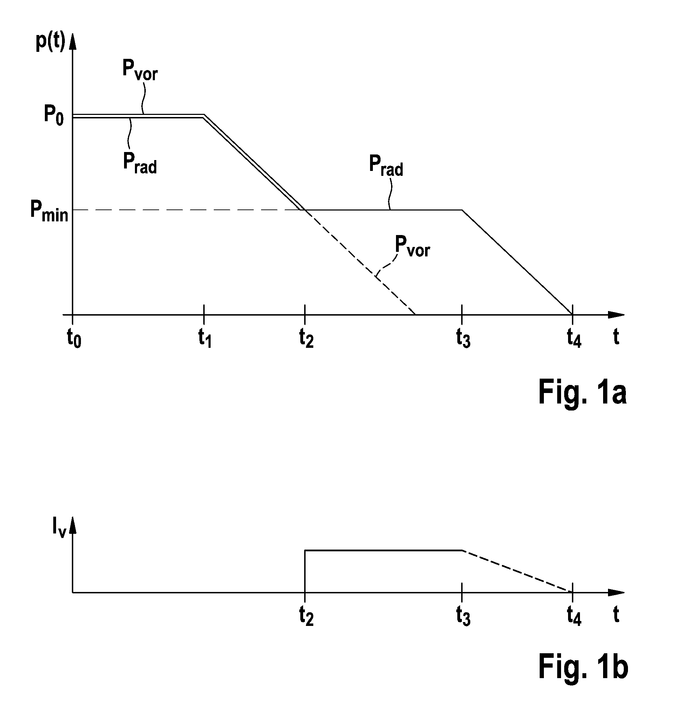

Figur 1 zeigt einen beispielhaften Verlauf des Bremsdrucks p an einem Rad (p_{rad}) und am Hauptbremszylinder (pᵥₒᵣ) in einem Bremskreis eines Fahrzeugs, das mit einer aus dem Stand der Technik bekannten Berganfahrhilfe (Hill Hold System) ausgestattet ist. Es wird davon ausgegangen werden, dass sich das Fahrzeug zum Zeitpunkt t₀ an einer Steigung im Stillstand befindet. Der Fahrer hält das Bremspedal gedrückt. Im Bremskreis des Fahrzeugs herrscht ein Bremsdruck p₀. Ab dem Zeitpunkt t₁ nimmt der Fahrer den Fuß vom Bremspedal, woraufhin der Bremsdruck pᵥₒᵣ zu sinken beginnt. Das Absinken des Bremsdrucks pᵥₒᵣ wird mittels eines Drucksensors (Vordrucksensor) überwacht. Zum Zeitpunkt t₂ erreicht der Bremsdruck pᵥₒᵣ einen Mindestbremsdruck pₘᵢₙ, der mindestens erforderlich ist, um das Fahrzeug im Stillstand zu halten. Dieser Mindestbremsdruck pₘᵢₙ ist abhängig von der Steigung und anderen Einflussfaktoren, wie z. B. dem Gewicht des Fahrzeugs, und wird in einem Steuergerät des Hill Hold Systems berechnet.

Wenn der im Bremskreis herrschende Druck pᵥₒᵣ zum Zeitpunkt t₂ den Mindestbremsdruck pₘᵢₙ erreicht, wird ein Ventil - üblicherweise ein so genanntes Umschaltventil - im Bremskreis geschlossen, das den aktuellen Bremsdruck pᵥₒᵣ in der Radbremse einsperrt. Das Ventil wird hierzu mit einem bestimmten Strom angesteuert, der die Höhe des Bremsdrucks bestimmt, den das Ventil halten kann, ohne überströmt zu werden. Fig. 1b zeigt den entsprechenden Verlauf des Ventilstroms Iᵥ. Im vorliegenden Fall wird am Ventil ein Druckschwellenwert pₛ in Höhe des Mindestbremsdrucks pₘᵢₙ eingestellt; es gilt pₛ = pₘᵢₙ. Der Rad-Bremsdruck p_{rad} bleibt danach auf dem Niveau des Mindestbremsdrucks pₘᵢₙ, während der Hauptbremszylinder-Druck pᵥₒᵣ weiter fällt. Aufgrund des an den Radbremsen eingesperrten Drucks wird das Fahrzeug automatisch im Stillstand gehalten.

Anschließend beginnt Fahrer das Gaspedal zu betätigen, um anzufahren. Sobald das Motordrehmoment im Zeitpunkt t₃ einen vorgegebenen Schwellenwert erreicht hat, wird das Umschaltventil geöffnet. Hierzu wird der Ventilstrom Iv langsam (rampenförmig) auf den Wert null abgesenkt. Zum Zeitpunkt t₄ ist der Ventilstrom gleich null. Die Radbremsen sind dann völlig druckfrei, und das Fahrzeug kann anfahren.

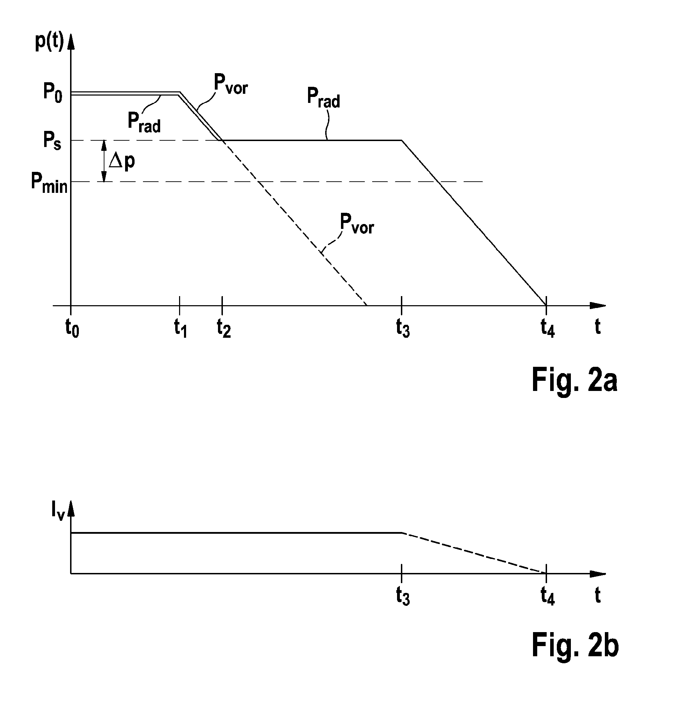

Figur 2 zeigt den Verlauf des Bremsdruck in der gleichen Bremssituation, jedoch bei einem Fahrzeug, das mit einer erfindungsgemäßen Berganfahrhilfe (Hill Hold System) ausgestattet ist. Diese Berganfahrhilfe benötigt im Unterschied zum vorstehend beschriebenen System keinen Vordrucksensor. Es muss somit kein Vordrucksensor im Fahrzeug verbaut werden.

Im Zeitpunkt t₀ steht das Fahrzeug wiederum an einer Steigung und der Fahrer betätigt das Bremspedal. Der Zustand "Fahrzeugstillstand" wird z. B. mittels der Rad-Drehzahlsensoren erkannt. Mangels Vordrucksensor kann der im Bremssystem herrschende Bremsdruck nicht gemessen werden. Eine Betätigung der Betriebsbremse wird lediglich qualitativ aus dem Schaltzustand des Bremslichtschalters (BLS) ermittelt. BLS geschlossen bedeutet dabei "Bremse betätigt" und BLS offen "Bremse nicht betätigt".

Das Ventil wird im dargestellten Beispiel unmittelbar im Zeitpunkt t₀ geschlossen, nachdem erkannt wurde, dass sich das Fahrzeug im Stillstand befindet und gleichzeitig die Bremse betätigt wird. Am Ventil wird ein Druckschwellenwert eingestellt, der ausreichend hoch ist, um das Fahrzeug im Stillstand zu halten. Fig. 2b zeigt wiederum den entsprechenden Verlauf des Ventilstroms Iᵥ.

Der Druckschwellenwert pₛ wird aus Gründen der Sicherheit vorzugsweise auf einen Wert gesetzt, der um eine Druckerhöhung Δp größer ist als ein Mindestbremsdruck pₘᵢₙ, der mindestens erforderlich ist, um das Fahrzeug im Stillstand zu halten. Der Druckschwellenwert pₛ wird von einem Algorithmus unter Berücksichtigung der Steigung berechnet oder aus einer Kennlinie ausgelesen. Der Druckschwellenwert pₛ kann je nach Steigung z. B. zwischen 10 bar (in der Ebene) und 50 bar (bei z. B. 20% Steigung) betragen.

Ab dem Zeitpunkt t₁ beginnt der Fahrer die Bremse zu lösen, woraufhin der Bremsdruck pᵥₒᵣ zu sinken beginnt. Solange der am Ventil herrschende Differenzdruck größer ist als der Druckschwellenwert pₛ wird das Umschaltventil in Richtung des Hauptbremszylinders überströmt. Zum Zeitpunkt t₂ erreicht der Bremsdruck pᵥₒᵣ den Druckschwellenwert pₛ. Während der Bremsdruck pᵥₒᵣ danach weiter absinkt, bleibt der Rad-Bremsdruck p_{rad} auf dem Niveau des Druckschwellenwerts pₛ. Das Fahrzeug wird somit automatisch im Stillstand gehalten.

Ab dem Zeitpunkt t₃ wird wiederum ein Anfahrwunsch des Fahrers erkannt, das Umschaltventil wird langsam geöffnet und der Bremsdruck p_{rad} beginnt abzusinken. Dadurch lösen sich die Radbremsen und das Fahrzeug kann anfahren.

## Patentansprüche

1. Verfahren zum automatischen Halten eines Kraftfahrzeugs im Stillstand mit Hilfe eines Ventils, mittels dessen der an einer Bremse herrschende Bremsdruck (p) auf einem vorgebbaren Wert (pₛ) gehalten werden kann, **dadurch gekennzeichnet, dass** eine Steigung und ein von der Steigung abhängiger Druckschwellenwert (pₛ) ermittelt werden, und dass der Druckschwellenwert (pₛ) unabhängig von dem im Bremskreis vorherrschenden Bremsdruck (p) am Ventil eingestellt wird, wenn sich das Kraftfahrzeug im Stillstand befindet.

2. Verfahren nach Anspruch 1, **dadurch gekennzeichnet, dass** in Abhängigkeit der Steigungsinformation ein Mindestbremsdruck (pₘᵢₙ) ermittelt wird, der zum Halten des Fahrzeugs im Stillstand erforderlich ist, und der Druckschwellenwert (pₛ) am Druckbegrenzungsventil mindestens ebenso hoch wie der Mindestbremsdruck (pₘᵢₙ) eingestellt wird.

3. Verfahren nach Anspruch 2, **dadurch gekennzeichnet, dass** eine von der Steigung abhängige Druckerhöhung (Δp) ermittelt wird, und der Druckschwellenwert (pₛ) um die ermittelte Druckerhöhung (Δp) höher eingestellt wird als der Mindestbremsdruck (pₘᵢₙ).

4. Verfahren nach einem der vorhergehenden Ansprüche, **dadurch gekennzeichnet, dass** die Steigung mittels eines Beschleunigungssensors und/oder eines Neigungssensors ermittelt wird.

5. Verfahren nach einem der vorhergehenden Ansprüche, **dadurch gekennzeichnet, dass** der Druckwellenwert (pₛ) am Ventil eingestellt wird, bevor der Fahrer beginnt, die Bremse zu lösen.

6. Verfahren nach einem der vorhergehenden Ansprüche, **dadurch gekennzeichnet, dass** der Druckwellenwert (pₛ) am Ventil eingestellt wird, sobald erkannt wird, dass die Bremse betätigt wird und das Fahrzeug zum Stillstand gekommen ist.

7. Verfahren nach einem der vorhergehenden Ansprüche, **dadurch gekennzeichnet, dass** eine Betätigung der Bremse aus dem Zustand eines Bremslichtschalters ermittelt wird.

8. Verfahren nach einem der vorhergehenden Ansprüche, **dadurch gekennzeichnet, dass** der Druckschwellenwert (pₛ) am Ventil so lange eingestellt wird, bis ein Anfahrwunsch eines Fahrers erfasst wird.

9. Verfahren nach einem der vorhergehenden Ansprüche, **dadurch gekennzeichnet, dass** bei einem Fahrzeug mit mehreren Bremskreisen und/oder mehreren Ventilen identische oder verschiedene Druckschwellenwerte (pₛ) eingestellt werden.

10. Steuervorrichtung, ausgestattet mit einem Algorithmus entsprechend der vorstehenden Ansprüche.

## Claims

1. Method for automatically keeping a motor vehicle in a stationary state using a valve, by means of which the brake pressure (p) which is present at a brake can be maintained at a predefinable value (pₛ), **characterized in that** a positive gradient and a pressure threshold value (pₛ) which is dependent on the positive gradient are determined, and **in that** when the motor vehicle is in a stationary state the pressure threshold value (pₛ) is set at the valve independently of the brake pressure (p) which is present in the brake circuit.

2. Method according to Claim 1, **characterized in that** a minimum brake pressure (pₘᵢₙ) which is necessary to keep the vehicle in a stationary state is determined as a function of the positive gradient information, and the pressure threshold value (pₛ) at the pressure-limiting valve is set to be at least as high as the minimum brake pressure (pₘᵢₙ).

3. Method according to Claim 2, **characterized in that** a pressure increase (Δp) which is dependent on the positive gradient is determined, and the pressure threshold value (pₛ) is set higher by an amount equal to the determined pressure increase (Δp) than the minimum brake pressure (pₘᵢₙ).

4. Method according to one of the preceding claims, **characterized in that** the positive gradient is determined by means of an acceleration sensor and/or an inclination sensor.

5. Method according to one of the preceding claims, **characterized in that** the pressure threshold value (pₛ) is set at the valve before the driver starts to release the brake.

6. Method according to one of the preceding claims, **characterized in that** the pressure threshold value (pₛ) is set at the valve as soon as it is detected that the brake is activated and the vehicle has come to a stationary state.

7. Method according to one of the preceding claims, **characterized in that** actuation of the brake is determined from the state of a brake light switch.

8. Method according to one of the preceding claims, **characterized in that** the pressure threshold value (pₛ) is set at the valve until a starting request of a driver is detected.

9. Method according to one of the preceding claims, **characterized in that** in the case of a vehicle with a plurality of brake circuits and/or a plurality of valves, identical or different pressure threshold values (pₛ) are set.

10. Control device, equipped with an algorithm corresponding to the preceding claims.

## Revendications

1. Procédé pour maintenir automatiquement un véhicule automobile à l'arrêt à l'aide d'une soupape, au moyen de laquelle la pression de frein (p) appliquée à un frein peut être maintenue à une valeur prédéfinissable (pₛ), **caractérisé en ce qu'**une pente et une valeur de seuil de pression (pₛ) dépendant de la pente sont déterminées et **en ce que** la valeur de seuil de pression (pₛ) est ajustée au niveau de la soupape indépendamment de la pression de frein (p) régnant préalablement dans le circuit de freinage, lorsque le véhicule automobile se trouve à l'arrêt.

2. Procédé selon la revendication 1, **caractérisé en ce qu'**en fonction de l'information relative à la pente, une pression de frein minimale (pₘᵢₙ) est déterminée, laquelle est nécessaire pour maintenir le véhicule à l'arrêt, et la valeur de seuil de pression (pₛ) au niveau de la soupape de limitation de pression est ajustée au moins de manière à être aussi élevée que la pression de frein minimale (pₘᵢₙ).

3. Procédé selon la revendication 2, **caractérisé en ce qu'**une augmentation de pression (Δp) dépendant de la pente est déterminée et la valeur de seuil de pression (pₛ) est ajustée de l'augmentation de pression déterminée (Δp) de manière à être plus élevée que la pression de frein minimale (pₘᵢₙ).

4. Procédé selon l'une quelconque des revendications précédentes, **caractérisé en ce que** la pente est déterminée au moyen d'un capteur d'accélération et/ou d'un capteur d'inclinaison.

5. Procédé selon l'une quelconque des revendications précédentes, **caractérisé en ce que** la valeur de seuil de pression (pₛ) est ajustée au niveau de la soupape avant que le conducteur ne commence à relâcher le frein.

6. Procédé selon l'une quelconque des revendications précédentes, **caractérisé en ce que** la valeur de seuil de pression (pₛ) est ajustée au niveau de la soupape dès que l'on détecte que le frein est actionné et que le véhicule est parvenu à l'arrêt.

7. Procédé selon l'une quelconque des revendications précédentes, **caractérisé en ce qu'**un actionnement du frein est déterminé à partir de l'état d'un commutateur de feu de frein.

8. Procédé selon l'une quelconque des revendications précédentes, **caractérisé en ce que** la valeur de seuil de pression (pₛ) au niveau de la soupape est ajustée jusqu'à ce qu'un souhait de démarrage du conducteur soit détecté.

9. Procédé selon l'une quelconque des revendications précédentes, **caractérisé en ce que** dans le cas d'un véhicule avec plusieurs circuits de freinage et/ou plusieurs soupapes, des valeurs de seuil de pressions identiques ou différentes (pₛ) sont ajustées.

10. Dispositif de commande, muni d'un algorithme de manière correspondant aux revendications précédentes.
